# EUROPÄISCHE PATENTSCHRIFT

(11) **EP 1 945 971 B1**
(45) Veröffentlichungstag und Bekanntmachung des Hinweises auf die Patenterteilung: **26.05.2010**
(21) Anmeldenummer: 06807710.6
(22) Anmeldetag: 01.11.2006
(51) Int. Cl.: F16H 25/20

(54) **KUGELGEWINDETRIEB MIT ÜBERLASTKUPPLUNG**
BALL SCREW DRIVE HAVING OVERLOAD CLUTCH
VIS D'ENTRAINEMENT A BILLES AVEC ACCOUPLEMENT DE SURCHARGE

(30) Priorität: 08.11.2005 DE 102005053896
(43) Veröffentlichungstag der Anmeldung: 23.07.2008
(73) Patentinhaber: SIEMENS AKTIENGESELLSCHAFT, 80333 München (DE)
(72) Erfinder: ABRAHAM, Simon, 10115 Berlin (DE); BEYER, Michael, 12415 Berlin (DE)
(86) Internationale Anmeldenummer: PCT/EP2006/068014
(87) Internationale Veröffentlichungsnummer: WO 2007/054454

(56) Entgegenhaltungen:
- WO-A-92/01884
- DE-A1- 4 322 540
- DE-A1- 4 427 809
- GB-A- 2 112 495

## Beschreibung

Die vorliegende Erfindung betriff einen Kugelgewindetrieb mit einem Gehäuse, in welchem eine Spindelmutter auf einer Kugelgewindespindel angeordnet ist, mit einer Überlastkupplung, die bei Erreichen einer auf die Kugelgewindespindel wirkenden Auslösekraft auslöst, mit einer Vorspanneinrichtung, die mit wenigstens einem Stellglied auf eine Vorspannkraft einstellbar ist und auf die Überlastkupplung wirkt, und mit einem beweglichen Druckelement, an das die Vorspanneinrichtung angreifen kann, um die Vorspannkraft auf die Überlastkupplung zu übertragen.

Ein solcher Kugelgewindetrieb ist aus der gattungsbildenden DE 44 27 809 bekannt. Der darin beschriebene Kugelgewindetrieb weist ein Gehäuse aus zwei zylindrischen Hohlkörpern auf, die über die Spindelmutter gestülpt sind. Stirnseitig vorgesehene Stellmuttern wirken über Tellerfedern auf Drucklager, die sich an der Spindelmutter abstützen. Beim Überschreiten einer zulässigen Stellkraft bzw. beim Erreichen einer Auslösekraft führt die Spindelmutter eine Relativbewegung zu dem anzutreibenden Element aus, indem sie eine der Tellerfederanordnungen zusammenpresst und nach einem vorgegebenen Auslenkweg einen der zylindrischen Hohlkörper in Bezug zu dem anderen verschiebt und die Überlastkupplung auslöst bzw. durchrutschen lässt.

Die Konstruktion des Standes der Technik ist sehr kompliziert und verlangt eine Reihe von gegeneinander verschiebbaren Bauteilen und sogar ein zweiteiliges Gehäuse. Es ist somit kein gekapselter Aufbau im Bereich der Überlastkupplung möglich. Darüber hinaus wird die Auslösekraft im Wesentlichen durch die Federraten der Tellerfedern sowie die Breite des Spaltes zwischen den Gehäusehälften und der Spindelmutter bestimmt. Die für die Auslösekraft wesentlichen Parameter sind daher nur schwer bestimmbar und eine präzise Einstellung derselben kaum möglich.

Die Aufgabe der vorliegenden Erfindung ist daher, einen eingangs genannten Kugelgewindetrieb derart weiter zu bilden, dass die Auslösekraft im Wesentlichen nur noch abhängig ist von auf die Überlastkupplung wirkenden, einstellbaren Vorspannkräften.

Die Aufgabe wird erfindungsgemäß dadurch gelöst, dass das Gehäuse einteilig ausgebildet ist und das Druckelement gleitend an einer Gehäusefläche und an einer Umfangsfläche der Spindelmutter angeordnet ist.

Mit dieser Konstruktion ist es möglich, über jedes Stellglied eine Vorspannkraft einzustellen, die über ein bewegliches Druckelement direkt auf die Überlastkupplung übertragen wird, ohne dass sich Gehäuseteile dabei relativ zueinander bewegen müssen. Darüber hinaus erlaubt die erfindungsgemäße Bauweise einen gekapselten Aufbau des Kugelgewindetriebs.

Weitere Vorteile ergeben sich aus den Merkmalen der Unteransprüche 2 bis 11.

Zwei Ausführungsformen der vorliegenden Erfindung werden im Folgenden anhand der Zeichnungen näher beschrieben.

Es zeigen:
- Fig. 1: eine schematische Schnittdarstellung im Längsschnitt durch einen Kugelgewindetrieb mit einer Überlastkupp- lung gemäß einer ersten Ausführungsform der vorlie- genen Erfindung;
- Fig. 2: eine schematische Darstellung im Längsschnitt durch einen Kugelgewindetrieb mit einer Überlastkupplung gemäß einer zweiten Ausführungsform der vorliegenden Erfindung.

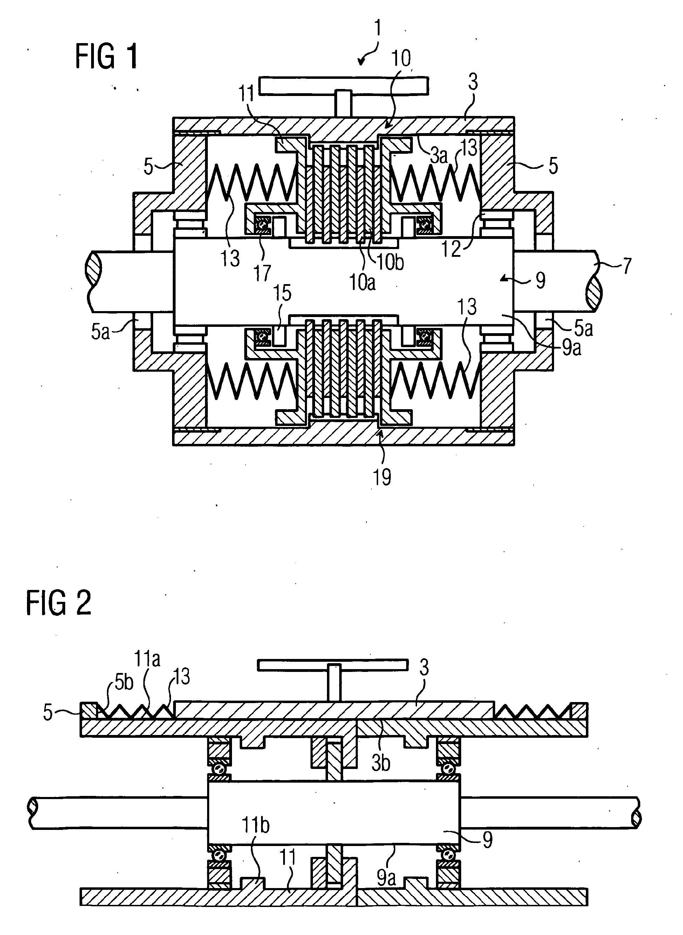

In Fig. 1 ist schematisch ein Kugelgewindetrieb 1 dargestellt, mit einem einteiligen Gehäuse 3, das an zwei gegenüber liegenden Stirnseiten mit jeweils einem Stellglied 5, das in der vorliegenden Ausführungsform vorzugsweise als Stellmutter ausgebildet ist, verschlossen ist. Die Stellglieder 5 weisen eine Durchgangsöffnung 5a auf, durch die eine Kugelgewindespindel 7 hindurch durchgeführt ist. Die Kugelgewindespindel 7 ist im Bereich des Gehäuses 3 von einer Spindelmutter 9 umschlossen, an deren Umfangsfläche 9a jedes Stellglied 5 durch ein Lager 12 abgestützt ist, das in der vorliegenden Ausführungsform als ein Rollenlager oder ein Radialkugellager mit Spielpassung ausgebildet sein kann. Die Spindelmutter 9 lässt sich auf diese Weise in dem Gehäuse 3 nicht nur verdrehen, sondern auch axial verschieben. Zwischen der Spindelmutter 9 und einer Innenseite des Gehäuses 3 ist eine Überlastkupplung 10 ausgebildet. In der vorliegenden Ausführungsform ist die Überlastkupplung 10 eine Lamellenkupplung mit Reiblamellen 10a des Gehäuses 3 und Reiblamellen 10b der Spindelmutter 9.

Die Überlastkupplung 10 wird durch zwei Druckelemente 11 begrenzt, die in der vorliegenden Ausführungsform als Druckring ausgebildet sind. Zwischen jedem Stellglied 5 und dem Druckring 11 ist eine Vorspanneinrichtung 13 angeordnet, welche in Abhängigkeit von jedem Stellglied 5 Vorspannkräfte auf die Druckelemente 11 ausübt. Die Vorspanneinrichtung 13 ist in der vorliegenden Ausführungsform vorzugsweise ein Federelement, insbesondere eine Druckfeder, wie beispielsweise eine Schrauben- oder Tellerfeder. Die Vorspannkräfte der Vorspanneinrichtung 13 liegen etwas über einer Auslösekraft der Überlastkupplung 10. Durch ein Verdrehen eines oder beider Stellglieder 5 kann die Vorspannkraft Fk und somit auch die Auslösekraft Fs eingestellt werden. In einer bevorzugten Ausführungsform werden beide Stellglieder 5 um einen gleichen Betrag verdreht, so dass gleiche Vorspannkräfte auftreten. Mit einer ungleichen Einstellung können hingegen Richtungsabhängigkeiten von Bauteilen ausgeglichen werden. Da sich die Vorspannkräfte Fk in der Mittellage aufheben, lässt sich die Spindelmutter 9 mit samt der Lamellenkupplung 10 und dem Druckelement 11 relativ leicht axial im Gehäuse 3 verschieben.

Die Funktionsweise der Überlastkupplung 10 wird im Folgenden beschrieben:
wird die Kugelgewindespindel 7 angetrieben, wandelt die Spindelmutter 9 ein Drehmoment der Kugelgewindespindel 7 in eine axiale Kraft F um, da die vorgespannte Überlastkupplung 10 ein Verdrehen der Spindelmutter 9 gegenüber dem Gehäuse 3 verhindert.

Die auf diese Weise erzeugte axiale Kraft F verschiebt dann die Spindelmutter 9 gegenüber dem Gehäuse 3 und der Überlastkupplung 10 in die entsprechende Wirkrichtung. Aufgrund des vorzugsweise symmetrischen Aufbaues des Kugelgewindetriebs soll im Folgenden nur die Wirkrichtung in Figur 1 zur linken Seite beschrieben werden. Die Relativverschiebung der Spindelmutter 9 gegenüber dem Gehäuse 3 erfolgt so lange, bis die Spindelmutter 9 mit einem linken Anschlag 15 gegen ein linkes Axialkugellager 17 des Druckelements 11 anstößt. Dann nimmt die Spindelmutter 9 die Überlastkupplung 10 und das Druckelement 11 mit, das an einer Gehäuseinnenfläche 3a entlang gleitet, bis das Druckelement 11 auf der rechten Seite in Fig. 1 gegen einen rechten Absatz 19 im Gehäuse 3 anschlägt.

In dieser Position bleibt die Überlastkupplung 10 während eines Betriebsvorganges. Die Vorspannkraft Fk in der Überlastkupplung 10 wird dabei zwar um den Betrag der Kraft F verringert, bleibt aber jederzeit ausreichend groß, um ein Durchrutschen der Überlastkupplung 10 zu verhindern. Aufgrund der Tatsache, dass die rechte Vorspanneinrichtung 13 das Druckelement 11 gegen den rechten Absatz 19 drückt, wird die Vorspannkraft Fk nur noch von der Vorspannkraft (Fv1) der linken Vorspanneinrichtung 13 sowie der axialen Kraft F bestimmt (Fk = Fv1-F).

Schlägt der Antrieb gegen ein Hindernis, so steigt die axiale Kraft F an. Dadurch wird die Vorspannkraft Fk in der Überlastkupplung 10 reduziert und gleichzeitig das Drehmoment in der Überlastkupplung 10 erhöht. Wird eine vorbestimmte Auslösekraft Fs erreicht, rutscht die Überlastkupplung 10 durch.

In Fig. 2 ist ein zweites Ausführungsbeispiel dargestellt. Auch die zweite Ausführungsform arbeitet mit dem in Bezug zur ersten Ausführungsform beschriebenen Wirkprinzip. Die zweite Ausführungsform unterscheidet sich lediglich konstruktiv von der ersten Ausführungsform dadurch, dass in dem einteiligen Gehäuse 3 Durchbrechungen vorgesehen sind und das Druckelement 11 mit einem Flächenteil 11a an einer Gehäuseinnenfläche 3b anliegt, wobei jedes Flächenteil 11a im Bereich der Gehäuseinnenfläche 3b Durchbrechungen aufweist, durch die die Druckelemente 11 wechselseitig mit Absätzen 11b hindurch geführt und an der Umfangsfläche 9a der Spindelmutter 9 gelagert sind. Jedes Stellglied 5 weist einen Flansch 5b auf. Zwischen diesem Flansch 5b und dem Gehäuse 3 ist die Vorspanneinrichtung 13 angeordnet.

## Patentansprüche

1. Kugelgewindetrieb mit einem Gehäuse (3), in welchem eine Spindelmutter (9) auf einer Kugelgewindespindel (7) angeordnet ist, mit einer Überlastkupplung (10), die bei Erreichen einer auf die Kugelgewindespindel (7) wirkenden Auslösekraft auslöst, mit einer Vorspanneinrichtung (13), die mit wenigstens einem Stellglied (5) auf eine Vorspannkraft einstellbar ist und auf die Überlastkupplung (10) wirkt, und mit wenigstens einem beweglichen Druckelement (11), an das die Vorspanneinrichtung (13) angreifen kann, um die Vorspannkraft auf die Überlastkupplung (10) zu übertragen,
**dadurch gekennzeichnet,**
**dass** das Gehäuse (3) einteilig ausgebildet ist und dass jedes Druckelement (11) gleitend an einer Gehäusefläche (3a, 3b) und an einer Umfangsfläche (9a) der Spindelmutter (9) angeordnet ist.

2. Kugelgewindetrieb nach Anspruch 1,
**dadurch gekennzeichnet,**
**dass** das Druckelement (11) ein die Überlastkupplung (10) begrenzender Druckring ist.

3. Kugelgewindetrieb nach Anspruch 1 oder 2,
**dadurch gekennzeichnet,**
**dass** die Vorspanneinrichtung (13) zwei Druckfedern umfasst, die jeweils einem Stellglied (5) zugeordnet sind.

4. Kugelgewindetrieb nach einem der vorstehenden Ansprüche,
**dadurch gekennzeichnet,**
**dass** zwischen jedem Stellglied (5) und der Umfangsfläche (9a) der Spindelmutter (9) ein Lager (12) angeordnet ist.

5. Kugelgewindetrieb nach Anspruch 4,
**dadurch gekennzeichnet,**
**dass** das Lager (12) ein Rollenlager ist.

6. Kugelgewindetrieb nach Anspruch 4,
**dadurch gekennzeichnet,**
**dass** das Lager (12) ein Radialkugellager ist.

7. Kugelgewindetrieb nach einem der vorstehenden Ansprüche,
**dadurch gekennzeichnet,**
**dass** die Überlastungskupplung (10) eine Lamellenkupplung ist.

8. Kugelgewindetrieb nach Anspruch 7, ,
**dadurch gekennzeichnet,**
**dass** die Lamellenkupplung wenigstens eine Reiblamelle der Spindelmutter (9) und wenigstens zwei Reiblamellen des Gehäuses (3) umfasst.

9. Kugelgewindetrieb nach einem der vorstehenden Ansprüche,
**dadurch gekennzeichnet,**
**dass** die Vorspanneinrichtung (13) gehäuseinnenseitig angeordnet ist.

10. Kugelgewindetrieb nach einem der Ansprüche 1 bis 8,
**dadurch gekennzeichnet,**
**dass** jedes Druckelement (11) mit einem Flächenteil (11a) an einer Gehäuseinnenfläche (3b) anliegt, wobei jedes Flächenteil (11a) im Bereich der Gehäuseinnenfläche (3b) Durchbrechungen aufweist, durch welche die Druckelemente (11) wechselseitig mit Absätzen (11b) hindurch geführt und an der Umfangsfläche (9a) der Spindelmutter (9) gelagert sind.

11. Kugelgewindetrieb nach Anspruch 10
**dadurch gekennzeichnet,**
**dass** jedes Stellglied (5) einen Flansch (5b) aufweist und die Vorspanneinrichtung (13) zwischen dem Flansch (5b) und dem Gehäuse (3) angeordnet ist.

## Claims

1. Ball screw with a housing (3) in which a spindle nut (9) is arranged on a ball screw spindle (7), with an overload clutch (10) that trips on reaching a tripping force acting on the ball screw spindle (7), with a preloading device (13) that can be set by means of at least one setting member (5) to a preloading force and acts on the overload clutch (10), and with at least one moving thrust element (11) that can be contacted by the preloading device (13) in order to transmit the preloading force to the overload clutch (10),
**characterized in that**
the housing (3) is formed in one piece and that each thrust element (11) is arranged so that it slides along one surface of the housing (3a, 3b) and along one circumferential surface (9a) of the spindle nut (9).

2. Ball screw according to Claim 1, **characterized in that** the thrust element (11) is a thrust ring limiting the overload clutch (10).

3. Ball screw according to Claim 1 or 2, **characterized in that** the preloading device (13) has two compression springs, each of which is assigned to a setting member (5).

4. Ball screw according to one of the preceding claims, **characterized in that** a bearing (12) is arranged between each setting member (5) and the circumferential surface (9a) of the spindle nut (9).

5. Ball screw according to Claim 4, **characterized in that** the bearing (12) is a roller bearing.

6. Ball screw according to Claim 4, **characterized in that** the bearing (12) is a radial-contact ball bearing.

7. The ball screw according to one of the preceding claims, **characterized in that** the overload clutch (10) is a multi-plate clutch.

8. Ball screw according to Claim 7, **characterized in that** the multi-plate clutch comprises at least one friction plate of the spindle nut (9) and at least two friction plates of the housing (3).

9. Ball screw according to one of the preceding claims, **characterized in that** the preloading device (13) is arranged on the inside of the housing.

10. Ball screw according to one of Claims 1 to 8, **characterized in that** each thrust element (11) contacts an inner surface of the housing (3b) with a flat section (11a), with each flat section (11a) having openings in the area of the housing inner surface (3b) through which the thrust elements (11) are guided on alternate sides with shoulders (11b) and are supported on the circumferential surface (9a) of the spindle nut (9).

11. Ball screw according to Claim 10, **characterized in that** each setting member (5) has a flange (5b) and that the preloading device (13) is arranged between the flange (5b) and the housing (3).

## Revendications

1. Vis d'entraînement à billes, comprenant un carter ( 3 ), dans lequel un écrou ( 9 ) de broche est monté sur une broche ( 7 ) filetée à billes, un accouplement ( 10 ) de surcharge, qui se déclenche lorsque est atteinte une force de déclenchement agissant sur la broche ( 7 ) filetée à billes, un dispositif ( 13 ) de précontrainte, qui est réglable jusqu'à une force de précontrainte par au moins un actionneur ( 5 ) et qui agit sur l'accouplement ( 10 ) de surcharge, et au moins un élément ( 11 ) mobile d'application d'une pression, que le dispositif ( 13 ) de précontrainte peut attaquer pour transmettre la force de précontrainte à l'accouplement ( 10 ) de surcharge,
**caractérisé**
**en ce que** le carter ( 3 ) est constitué d'une seule pièce et en ce que chaque élément ( 11 ) d'application d'une pression est monté glissant sur une surface ( 3a, 3b ) du carter et sur une surface ( 9a ) périphérique de l'écrou ( 9 ) de broche.

2. Vis d'entraînement à billes suivant la revendication 1,
**caractérisé**
**en ce que** l'élément ( 11 ) d'application d'une pression est une bague de butée délimitant l'accouplement ( 10 ) de surcharge.

3. Vis d'entraînement à billes suivant la revendication 1 ou 2,
**caractérisé**
**en ce que** le dispositif ( 13 ) de précontrainte comprend deux ressorts de compression associés respectivement à un actionneur ( 5 ).

4. Vis d'entraînement à billes suivant l'une des revendications précédentes,
**caractérisé**
**en ce qu'**un palier ( 12 ) est interposé entre chaque actionneur ( 5 ) et la surface ( 9a ) périphérique de l'écrou ( 9 ) de broche.

5. Vis d'entraînement à billes suivant la revendication 4,
**caractérisé**
**en ce que** le palier ( 12 ) est un palier à rouleaux.

6. Vis d'entraînement à billes suivant la revendication 4,
**caractérisé**
**en ce que** le palier ( 12 ) est un roulement à billes à charge radiale.

7. Vis d'entraînement à billes suivant l'une des revendications précédentes,
**caractérisé**
**en ce que** l'accouplement ( 10 ) de surcharge est un accouplement à lamelles.

8. Vis d'entraînement à billes suivant la revendication 7,
**caractérisé**
**en ce que** l'accouplement à lamelles comprend au moins une lamelle de frottement de l'écrou ( 9 ) de broche et au moins deux lamelles de frottement du carter ( 3 ).

9. Vis d'entraînement à billes suivant l'une des revendications précédentes,
**caractérisé**
**en ce que** le dispositif ( 13 ) de précontrainte est disposé du côté de l'intérieur du carter.

10. Vis d'entraînement à billes suivant l'une des revendications 1 à 8,
**caractérisé**
**en ce que** chaque élément ( 11 ) d'application d'une pression s'applique par une partie ( 11a ) de surface à une surface ( 3b ) intérieure du carter, chaque partie ( 11a ) de surface ayant dans la région de la surface ( 3b ) intérieure du carter des traversées, dans lesquelles les éléments ( 11a ) d'application d'une pression sont guidés réciproquement par des gradins (11b) et sont montés sur la surface ( 9a ) périphérique de l'écrou ( 9 ) de broche.

11. Vis d'entraînement à billes suivant la revendication 10,
**caractérisé**
**en ce que** chaque actionneur ( 5 ) a une bride ( 5b ) et le dispositif ( 13 ) de précontrainte est monté entre la bride ( 5b ) et le carter ( 3 ).
